**Europäisches Patentamt**

**European Patent Office**

**Office européen des brevets**

(19)

(11) Veröffentlichungsnummer : **0 363 612 B1**

(12) ## EUROPÄISCHE PATENTSCHRIFT

(45) Veröffentlichungstag der Patentschrift :
**22.07.92 Patentblatt 92/30**

(51) Int. Cl.$^5$ : **C02F 1/52, C02F 1/58**

(21) Anmeldenummer : **89115451.0**

(22) Anmeldetag : **22.08.89**

(54) **Verfahren zur Entsorgung von einen hohen Gehalt an Ammoniumstickstoff aufweisenden Abwässern.**

(30) Priorität : **11.10.88 DE 3834543**

(43) Veröffentlichungstag der Anmeldung :
**18.04.90 Patentblatt 90/16**

(45) Bekanntmachung des Hinweises auf die
Patenterteilung :
**22.07.92 Patentblatt 92/30**

(84) Benannte Vertragsstaaten :
**AT BE CH DE ES FR GB GR IT LI LU NL SE**

(56) Entgegenhaltungen :
**DE-A- 3 732 896**

(56) Entgegenhaltungen :
**CHEMICAL ABSTRACTS, Vol. 104, No. 15, 14 APRIL 1986; S. 628, Zusammenfassung No. 128994k; Biskupski Andrzej et al.:"MANUFACTURE OF AMMONIUM MAGNESIUM PHOSPHATE FROM AMMONIUM AND PHOSPHATE IONS CONTAINED IN WASTE-WATER"**

(73) Patentinhaber : **PASSAVANT-WERKE AG
W-6209 Aarbergen 7 (DE)**

(72) Erfinder : **Denne, Alfred
Niederbexbacherstrasse 27
W-6680 Neunkirchen-Kohlenhof (DE)**
Erfinder : **Supperl, Wolfgang, Dipl.-Ing.
Heerstrasse 52
W-6000 Frankfurt/Main 90 (DE)**

EP 0 363 612 B1

## Beschreibung

Die Erfindung bezieht sich auf ein Verfahren zur Entsorgung von einen hohen Gehalt an Ammoniumstickstoff aufweisenden Abwässern, insbesondere Deponie-Sickerwässern oder Gülleabwässern aus Intensiv-Tierhaltungen.

Da bei Mülldeponien - speziell Hausmülldeponien das austretende Sickerwasser durch die im Müllkörper ablaufende und mit zunehmendem Deponiealter leistungsfähiger werdende anaerobbiologische Reinigung (Methangärung) nur noch geringe Mengen aerob-biologisch verwertbarer Substanzen enthält, ist die üblicherweise mit Belebungsanlagen, Tropfkörpern oder Teichen praktizierte Reinigung erschwert.

Typisch für Sickerabwässer aus Deponien, die sich in der optimalen Phase der Methangärung befinden, sind relativ hohe $CSB_5$-Werte bei niedrigen $BSB_5$-Konzentrationen. Der am meisten zu beachtende Schadstoff ist Ammonium, $NH_4+$, das üblicherweise in Konzentrationen von ca. 200 bis 1000 mg/1 vorkommt.

Zwar ist die aerob-biologische Umwandlung des Ammoniums zu Nitrat (Nitrifikation) möglich, doch kommt es infolge geringer Konzentrationen $BSB_5$-verursachender Substanzen zu folgenden Erschwernissen:

Nitrifizierende Bakterien vermehren sich sehr langsam und ergeben daher in Belebungsanlagen erst dann die erwünschte Nitrifikationsleistung, wenn sie hinreichende Mengen von belebtem Schlamm besiedeln können, auf diese Weise im Kreislauf Belebung-Nachklärbecken-Belebung bleiben und nicht ausgeschwemmt werden.

Durch die geringen $BSB_5$-Konzentrationen des Sickerwassers aus Deponien mit optimaler Methangärung unterbleibt jedoch die Ausbildung von hinreichenden Mengen belebten Schlamms, so daß die Nitrifikation instabil ist und neben mehr oder weniger großen Mengen $NH_4+$ auch noch größere Mengen Nitrit, $NO_2-$, in den Vorfluter gelangen.

Selbst wenn die vollständige Nitrifikation gelingt, ist eine anschließende Denitrifikation nicht möglich, weil das Sickerwasser kaum organisch abbaubare Substanzen enthält, die zur anaeroben Nitratatmung und damit zur Denitrifikation führen würden.

Erschwert bzw. verhindert wird die Nitrifikation auch durch die niedrigen Temperaturen im Winterhalbjahr - nitrifizierende Bakterien sind wärmeliebend - und die während längerer Niederschlagsperioden oft stark erhöhten Sickerwassermengen, die meist auch die $NH_4+$ -Frachten gegenüber Trockenwetterperioden um ein Mehrfaches ansteigen lassen.

In der Regel treffen diese beiden Einflußgrößen, niedrige Temperaturen und vergrößerte Sickerwassermengen bzw. $HN_4^+$ -Frachten, zeitgleich zusammen.

Auch nach vollzogener aerob-biologischer Reinigung enthalten Müllsickerwässer noch beträchtliche Mengen organischer Substanzen, die die Wässer, je nach Menge, hell- bis dunkelbraun färben und als CSB meßbar sind.

Bekannt ist, die biologisch schlecht abbaubaren organischen Substanzen der Sickerwässer aus Mülldeponien mit optimaler Methangärung durch Flockungsfällung mit Eisen-3-salzen, z.B. $FeCl_3$, als Schlamm abzuscheiden, wenn dabei ein pH-Wert von 5,0 bis 5,3 eingestellt wird.

Allgemein ist in Müllsickerwässern aber eine hohe Säurekapazität, gemessen als $K_{s\ 4,3}$ -Wert in mmol/l, vorhanden, die bei Einstellung auf pH-Wert 5,0 bis 5,3 einen unvertretbar hohen Aufwand an z.B. $FeCl_3$ erfordert; entsprechend hoch wäre auch die Erhöhung der Chlorid-Konzentration im behandelten Müllsickerwasser.

Es ist auch schon vorgeschlagen worden (VDI-Nachrichten Nr.11/18.3.1988 - S. 35), bei Gülle aus Intensiv-Tierhaltungen zur Elimination des Ammonstickstoffs bestimmte Anteile Phosphorsäure und Magnesiumoxid zuzusetzen. Das Ammonium fällt als Magnesiumammoniumphosphat (MAP) aus und kann in kristalliner Form abgetrennt werden. Da es im Durchschnitt

9,9 Gewichts - %     Mg,

5,71 "                 N und

12,62 "               P

enthält, kann es zu Düngezwecken vielfältig benutzt werden. Da das MAP als schwerlösliche Verbindung gilt, ist der Dünger ein sogenannter Depot- oder Langzeitdünger, dessen Ausschwemmrate in das Grundwasser entsprechend gering ist. Die Fällung von Ammoniumstickstoff mit Magnesiumoxid und Phosphorsäure ist aus der analytischen Chemie als Nachweis für das Vorhandensein von Magnesium bekannt (G.Jander/E.Blasius: Einführung in das anorganisch-chemische Praktikum- 8 Aufl. 1968, S. 79).

Die in der Gülle außer dem Ammonium noch enthaltenen organischen Feststoffe müssen in einer Vorabscheidestufe mit Zentrifugen oder feinen Sieben abgetrennt werden. Dies ist sehr energieaufwendig. Außerdem wird die Säurekapazität bei der oben beschriebenen Fällung durch Magnesiumoxid nicht beachtet, so daß eine unvertretbar hohe überstöchiometrische Menge an Magnesiumoxid gebraucht wird.

Die Aufgabe, dieses vorbekannte Verfahren für Deponiesickerwässer und Gülle entsprechend zu optimieren, d.h. das Ammonium mit den geringstmöglichen Fällmitteleinsatz abzutrennen, wird nach der Erfindung mit den Merkmalen des Anspruchs 1 gelöst. Es wird hier also mehrstufig gearbeitet, wobei nach jeder Stufe durch Ausblasen des hierbei freigesetzten Kohlendioxids die Säurekapazität abgesenkt wird. Vorzugsweise wird in der ersten Phase auch schon ein Teil der Magnesiumverbindungen zugegeben, und zwar empfiehlt es sich, diesen Teil der Magnesiumverbindungen in der in der ersten Phase zuzugebenden Phoshorsäure zu lösen und dann zuzudosieren. Es hat sich bewährt, als Magesiumverbindung Magnesiumhydroxid zu verwenden, das durch Umsetzen von Magnesiumoxid gewonnen wird.Der Ammoniumausfällung kann eine Flockungsfällung zum Abbau der organischen Verschmutzungen folgen. Auch der Flockungsfällungsphase kann eine Ausblasstufe für Kohlendioxid nachgeschaltet werden. Bei hohem Gehalt an organischen Verschmutzungen kann der Flockungsfällung noch eine aerob-biologische Behandlung vorgeschaltet werden.

In einer bevorzugten Ausführungsform des Verfahrens wird wie folgt vorgegangen:
– Berechnung der für die $NH_4$-Fällung als $MgNH_4PO_4 \times 6\ H_2O$ erforderlichen Mengen MgO und $^4H_3PO_4 \times$ (1 Mol $NH_4$ erfordert 1 Mol MgO und 1 Mol $H_3PO_4$).
– Zugabe eines Teils der gesamten stöchiometrisch benötigten Phosphorsäure und ggf. eines des darin gelösten Teils des stöchiometrisch notwendigen Magnesiumhydroxids zum Freisetzen von $CO_2$ aus $HCO_3$.
– Belüften zum Ausblasen des freigesetzten Kohlenstoffdioxids.
– Zugabe der Restmenge der benötigten Phosphorsäure.
– Zugabe des Rests der berechneten Menge MgO in Form von Mg $(OH_2)$ und 2 Stunden intensives Mischen. Danach Messung des pH-Wertes und, falls erforderlich, weiterer MgO-Zusatz unter intensivem Mischen, bis ein pH-Wert von 8,7 erreicht wird.
– Abtrennen des behandelten Abwassers vom Fällungsprodukt durch Sedimentation oder sonstige mechanische Verfahren (z.B.Zentrifuge).
– Flockungsfällung des sedimentfreien Abwassers mit Eisen-3-chlorid oder sonstigen geeigneten Metallsalzen unter intensivem Mischen bis pH-Wert 5,0 bis 5,3.
– Abtrennung der Flockungsfällungsprodukte durch Sedimentation oder sonstige mechanische Verfahren.
– Ausblasen des freigesetzten Kohlenstoffdioxids, um einen pH-Wert um 7 zu erhalten.
– Falls erforderlich, aerob-biologische Nachbehandlung des Abwassers, z.B. zur Entfernung von restlichem Ammonium durch Nitrifikation oder zum Abbau von verbleibendem $BBS_5$ plus Nitrifikation.
– Wenn nach Ammoniumfällung noch so viel biologisch abbaubare Substanz vorhanden ist, daß die Flockungsfällung zu deren Entfernung auf den geforderten $BSB_5$ nicht ausreicht, wird nach der Ammoniumfällung die aerob-biologischen Behandlung vor der Flockungsfällung durchgeführt.

Die Erfindung wird nachfolgend anhand von zwei Fallbeispielen noch näher erläutert und der kommerzielle Vorteil quantifiziert.

## Fallbeispiel 1

### Unbehandeltes Deponiesickerwasser

| | | |
|---|---|---|
| CSB | mg/l | 355 |
| $BSB_5$ | mg/l | 40 |
| $N(NH_4)$ | mg/l | 213 |
| $P(PO_4)$ | mg/l | 0,05 |
| $K_{s\ 4,3}$ | mmol/l | 32,0 |
| Farbe | | gelb-braun |

– Berechnung des $H_3PO_4$-Zusatzes
(benutzt wird eine Phosphorsäure mit einer P-Konzentration von 49 g P/l)

$$N(NH_4) \qquad 213 \quad : \quad 14 \qquad = \qquad 15,2 \text{ mmol } N$$

$$P(PO_4\text{-Bedarf} \quad 15,2 \quad : \quad 30,97 \qquad = \qquad 470,7 \quad \text{mg} \quad P$$

$$H_3PO_4\text{-Zugabe} \quad 470,7 \quad : \quad 49 \qquad = \qquad 9,61 \text{ ml} \quad H_3PO_4$$

$$- \quad \text{Davon werden 65 \%} \qquad = \qquad 6,25 \text{ ml} \quad H_3 PO_4$$

einem Liter Deponiesickerwasser zugesetzt.

Der pH-Wert fällt von 7,15 auf 6,34 und steigt nach 35 Minuten Belüftung auf 7,99.

Dann Zusatz der restlichen Menge $H_3PO_4$/35 % = 3,36 ml. Der pH-Wert fällt auf 6,79.

- Zusatz von MgO. Verwendet wird die Qualität MgO, technisch, schwer 90 % MgO.

  Theoretisch erforderlich $15,2 \times 40,30 \times 1,11 = 680 \text{ mg/l}$

  Zugesetzt werden (10 % mehr) $= 750 \text{ mg/l}$

- pH-Wert nach 2 Stunden intensivem Mischen 7,46

  Es entseht zunächst Magnesiumhydrophosphat und daraus MAP. Danach Zugabe von 300 mg/l MgO und weiteres intensives Mischen;

  pH-Wert nach 3 Stunden 9,48

- Flockungsfällung mit Eisen-3-chlorid bis pH 5,0.

  Benötigt werden pro Liter Abwasser 1150 mg $FeCl_3$ in wässeriger Lösung.

– Abtrennen der Fällungsprodukte durch Sedimentation.

– Belüften des Klarwassers zum Austreiben des Kohlenstoffdioxids. Nach einer halben Stunde Belüftung ist der pH-Wert 7,35.

## Behandeltes Deponiesickerwasser

| | | |
|---|---|---|
| CSB | mg/l | 115 |
| $BSB_5$ | mg/l | 10 |
| $N(NH_4)$ | mg/l | 19,5 |
| $P(PO_4)$ | mg/l | 0,16 |
| $K_{s4,3}$ | mmol/l | 2,2 |
| Farbe | | wasserhell |

Die Abwasserabgabenverordnung schreibt eine Höchstgrenze von 50 mg/l $NH_4$ vor. Dieser Wert wird erheblich unterschritten.

Fallbeispiel 2

In diesem Fall wird nur die Magnesiumammoniumphosphatfällung mit Absenkung des $K_{s4,3}$-Wertes durchgeführt. Die Flockungsfällung erfolgt nach einer an die Magnesiumammoniumphophatfällung anschließenden aerob-biologischen Behandlung.

| Deponiesickerwasser | | unbehandelt | nach $NH_4$-Fällung |
|---|---|---|---|
| CSB | mg/l | 1090 | 1040 |
| $BSB_5$ | mg/l | 176 | 165 |
| $N/NH_4$ | mg/l | 572 | 21,3 |
| $P(PO_4)$ | mg/l | 0,15 | 5,19 |
| $K_{s4,3}$ | mmol/l | 86,5 | 20,0 |
| Farbe | | braun | braun |

Auch hier wird der Grenzwert von 50 mg/l $NH_4$ erheblich unterschritten.

Wirtschaftlichkeit des Verfahrens

Sofern eine chemische Behandlung alleine für eine Ableitung der Abwässer in eine Kanalisation oder einen Vorfluter genügt, sind die Investitionskosten wesentlich geringer als bei den bisher üblichen aerob-biologischen Anlagen (Fallbeispiel 1).

Für Abwässer des Fallbeispiels 2 ist eine aerob-biologische Behandlungsanlage für die Abwässer nach der Ammoniumfällung mit geringerem Aufwand zu erstellen und zu betreiben als ohne diese Fällung. Die Kosten für technische Phosphorsäure und technische Magnesiumoxid belaufen sich pro kg N ($NH_4$) auf ca. 19 bis 20 DM.

Eingesetzte Preise (ohne MWSt.)

1000 kg $H_3PO_4$, 85 %ig          1.500,00 DM

$$\frac{850 \times 30,9738}{97.995} = 268,66 \text{ kg P}$$

1kg P          5,58 DM

1000 kg MgO, 90%ig          1.000,00 DM

$$\frac{900 \times 24,305}{40.304} = 542,74 \text{ kg Mg}$$

1 kg Mg          1,84 DM

5

Theoretisch erforderlich sind:

$$14,0067 \text{ kg N(NH}_4) \text{ benötigen } 30,9738 \text{ kg P und } 24,305 \text{ kg Mg}$$
$$1 \quad\quad \text{kg N} \quad\quad 2,21 \text{ kg P} \quad 1,74 \text{ kg}$$

Praktisch erforderlich (Fallbeispiel 1)

$$1 \quad\quad \text{kg N} \quad\quad 2,43 \text{ kg P} \quad 2,95 \text{ kg Mg}$$

Theoretisch wird ein Salz $MgNH_4PO_4$ x 6 $H_2O$ erhalten (Molekulargewicht 245,405).

$$1 \text{ kg N (NH}_4) \text{ ergibt } 245,405 \quad : \quad 14,0067 \quad\quad = \quad 17,52 \text{ kg Salz}$$

Beim Fallbeispiel 1 wurden
pro kg N/(NH$_4$) gefällt erhalten $\quad\quad = \quad\quad 21,72$ kg Salz
Darin erhalten sind:

$$4,60 \text{ Gewichts-\% N (NH}_4) \quad\quad\quad = \quad\quad\quad 1,00 \text{ kg}$$
$$11,19 \text{ Gewichts-\% P} \quad\quad\quad\quad = \quad\quad\quad 2,43 \text{ kg}$$
$$13,55 \text{ Gewichts-\% Mg} \quad\quad\quad\quad = \quad\quad\quad 2,95 \text{ kg}$$

Weil das erzeugte Salz nur wenig wasserlöslich ist, säurebindende Eigenschaften durch überschüssiges MgO (bzw Mg (OH)$_2$ oder MgCO$_3$ hat, keine Kationen oder Anionen enthält, die Ballaststoffe darstellen, ist von einem besonders hohen Düngewert auszugehen.

Es müßte, da der Stickstoff für das Verfahren kostenlos aus dem Abwasser kommt, ein Erlös zu erzielen sein, der zumindest die Aufwendungen deckt.

Das neue Verfahren läßt sich außer bei Deponiesickerwässern und Gülle aus der Intensiv-Tierhaltung bei allen Abwässern aus Lebensmittel verarbeitenden Industrien anwenden, die einen hohen Nitratanfall haben, wie z.B. Kartoffelverarbeitung.

Das anaerobe biologische Behandlungsverfahren erzeugt ebenfalls hochammonstickstoffhaltige Abwässer. Auch hier kann das neue Verfahren erfolgversprechend angewendet werden.

Das kristallin gewonnene Magnesiumammoniumphosphat läßt sich ideal mit Klärschlamm als Bodenverbesserungsmittel mischen und ausbringen.

**Patentansprüche**

1. Verfahren zur Reinigung von einen hohen Gehalt an Anmoniumstickstoff aufweisenden Abwässern, insbesondere Deponie-Sickerwässern, durch Ausfällen des Ammoniumstickstoffs mit Phosphorsäure und Magnesiumverbindungen und Separieren des Kristallin ausfallenden Magnesiumammoniumphosphats, **dadurch gekennzeichnet**, daß
– in einer ersten Phase ein Teil der gesamten stöchiometrisch notwendigen Phosphorsäure und ggf. ein Teil der Magnesiumsverbindungen zugesetzt wird,

6

– in einer zweiten Phase durch einblasen von Luftsauerstoff und/oder durch Rühren Kohlenstoffdioxid freigesetzt wird,

– in einer dritten Phase die Restmenge an Phosphorsäure zugegeben wird,

– in einer vierten Phase weitere Magnesiumverbindungen unter intensivem Mischen zudosiert werden,

– danach der pH-Wert gemessen und bei Abweichung von einem pH-Wert von 8,7 weitere Magnesiumverbindungen unter intensivem Mischen zudosiert werden (fünfte Phase),

– und schließlich in einer letzten Phase das ausgefällte Magnesiumammoniumphosphat durch Aufbringen mechanischer Kräfte von Abwasser abgetrennt wird.

2. Verfahren nach Anspruch 1, **dadurch gekennzeichnet,** daß die in der ersten Phase zuzugebenden Magnesiumverbindungen in Phosphorsäure vorgelöst werden und die entstehende magnesiumsphosphathaltige phosphorsäurelösung zur Einleitung der Fällungsreaktion zudosiert wird.

3. Verfahren nach Anspruch 2, **dadurch gekennzeichnet,** daß etwa die Hälfte der gesamten stöchiometrisch nötigen Menge der Magnesiumverbindungen in dieser Form zugegeben wird.

4. Verfahren nach Anspruch 2, **dadurch gekennzeichnet,** daß die Magnesiumverbindungen Magnesiumoxid enthalten.

5. Verfahren nach Anspruch 4, **dadurch gekennzeichnet,** daß das Magnesiumoxid vor der Lösung in der Phosphorsäure in Magnesiumhydroxid überführt wird.

6. Verfahren nach Anspruch 1, **dadurch gekennzeichnet**, daß sich an die Abtrennphase eine Flockungsfällung anschließt.

7. Verfahren nach Anspruch 6, **dadurch gekennzeichnet**, daß als Fällungsmittel FeCl$_3$ verwendet wird.

8. Verfahren nach Anspruch 6, **dadurch gekennzeichnet**, daß der Flockungsfällungsphase eine Ausblasphase für freigewordenes Kohlenoxid bis zu einem ph-Wert um 7 nachgeschaltet ist.

9. Verfahren nach Anspruch 1, 7 oder 8, **dadurch gekennzeichnet**, daß bei hohem Gehalt an organischer Substanz nach der Ammoniumausfällung zuerst eine aerob-biologische Behandlung und danach die Flokkungsfällung durchgeführt wird.

10. Verfahren nach Anspruch 9, **dadurch gekennzeichnet**, daß die aerob-biologische Behandlung unter Beimischung von Aktivkohlepulver durchgeführt wird.

11. Verfahren nach einem oder mehreren der vorstehenden Ansprüche, **dadurch gekennzeichnet,** daß eine Phosphorsäure mit 45 bis 55 g P/l, insbesondere mit 49 g P/l verwendet wird.

12. Verfahren nach Anspruch 3, **dadurch gekennzeichnet**, daß in der ersten Phase 65 % und in der dritten Phase 35 % der Phosphorsäure zugegeben wird.

13. Verfahren nach einen oder mehreren der vorstehenden Ansprüche, **dadurch gekennzeichnet**, daß die Magnesiumverbindung in höchstens 10 % die stöchiometrische Menge übersteigender Dosierung zugeben wird.

14. Verfahren nach einem oder mehreren der vorstehenden Ansprüche, **dadurch gekennzeichnet**, daß in der vierten Phase 2 Stunden und in der fünften Phase 3 Stunden intensiv gerührt wird.

## Claims

1. Procedure for clarification of waste water with a high ammonia nitrogen content, here especially infiltration water from waste tips, by precipitation of ammonia nitrogen with phosphoric acid and magnesium compounds and separation of magnesium ammonium phosphate precipitating in crystalline form, **characterized in that** in a

– first phase a part of the stoichiometrically required quantity of phoshoric acid and, if necessary, a part of the magnesium compounds are added, that in a

– second phase carbon dioxide is set free by injecting atmospheric oxygen and/or mixing, that in a

– third phase the residual quantity of phosphoric acid is added, that in a

– fourth phase additional magnesium compounds are added by intensive mixing, and that,

– thereafter, the pH-value is measured and, in case this value differs from 8.7, further magnesium compounds are added while mixing intensely (fifth phase), and, finally, that in a

– last phase magnesium ammonium phosphate is separated from the waste water by application of mechanical forces.

2. Procedure according to claim 1, **characterized in that** the magnesium compounds which are added in the first phase are solved first in phosphoric acid and the phosphoric acid solution containing magnesium phosphate is added to start the precipitation reaction.

3. Procedure according to claim 2, **characterized in that** approximatively half of the stoichiometrically required quantity of magnesium compounds is added in this form.

4. Procedure according to claim 2, **characterized in that** the magnesium compounds contain magnesium oxide.

5. Procedure according to claim 4, **characterized in that** the magnesium oxide is converted to magnesium hydroxide before it is solved in phoshporic acid,

6. Procedure according to claim 1, **characterized in that** the separation phase is followed by the precipitation of flocs.

7. Procedure according to claim 6, **characterized in that** $FeCl_3$ is used as precipitation agent.

8. Procedure according to claim 6, **characterized in that** the phase with precipitation of flocs is followed by a phase in which carbon oxide having a pH-value until around 7, which has been set free, is blown out.

9. Procedure according to claim 1, 7 or 8, **characterized in that** in case of a high content of organic matters, the precipitation of ammonium is followed first by an aerobic-biological treatment before the precipitation of flocs is initiated.

10. Procedure according to claim 9, **characterized in that** activated carbon powder is added during the aerobic-biological treatment.

11. Procedure according to one or several of aforementioned claims, **characterized in that** a phosphoric acid with 45 to 55 g P/l, particularly with 49 g p/l, is used.

12. Procedure according to claim 3, **characterized in that** in the first phase 65 % and in the third phase 35 % of the phosphoric acid are added.

13. Procedure according to one or several of aforementioned claims, **characterized in that** the magnesium compounds are added at a dosage rate which exceeds the stoichiometrically required quantity by not more than 10 %.

14. Procedure according to one or several of aforementioned claims, **characterized in that** in the fourth phase 2 hours of intensive mixing takes place and in the fifth phase 3 hours.

**Revendications**

1. Procédure de purification pour des eaux usées ayant un contenu important d'azote ammoniacal, en particulier des eaux d'infiltration des dépôts de déchets, par précipitation de l'azote ammoniacal avec acide phosphorique et des composés de magnésium et par séparation du phosphate ammoniacomagnésien précipitant en forme cristalline, **caractérisée en ce que** dans une
   – première phase une partie de la quantité totale d'acide phosphorique étant nécessaire stoechiométriquement et, si en est besoin, une partie des composés de magnésium sont ajoutées, et que dans une
   – deuxième phase dioxyde de carbone est dégagé au moyen d'insufflation d'oxygène atmosphérique et/ou par remuant, que dans une
   – troisième phase la quantité résiduelle de l'acide phosphorique est ajoutée, que dans une
   – quatrième phase des composés de magnésium additionnaux sont ajoutés en remuant intensément,
   – qu'ensuite la valeur pH est mesurée et, si cette valeur diffère de 8.7, des composés de magnésium additionnaux sont ajoutés en remuant intensément (cinquième phase), et que, finalement, dans une
   – dernière phase le phosphate ammoniacomagnésien précipité est séparé des eaux usées en applicant des forces mécaniques.

2. Procédure selon revendication 1, **caractérisée en ce que** les composés de magnésium ajoutés dans la première phase sont dissous avant dans l'acide phosphorique pour former phosphate de magnésium et cette solution d'acide phosphorique contenant phoshpate de magnésium est ajoutée afin d'amorcer la réaction de précipitation.

3. Procédure selon revendication 2, **caractérisée en ce que** plus ou moins la moitié de la quantité des composés de magnésium étant nécessaire stoechiométriquement est ajoutée dans cette forme.

4. Procédure selon revendication 2, **caractérisée en ce que** les composés de magnésium contiennent oxyde de magnésium.

5. Procédure selon revendication 4, **caractérisée en ce que** l'oxyde de magnésium est transformé en hydroxyde de magnésium avant qu'il soit dissous dans l'acide phosphorique.

6. Procédure selon revendication 1, **caractérisée en ce que** la phase de séparation est suivie de la précipitation de flocs.

7. Procédure selon revendication 6, **caractérisée en ce que** le précipitant utilisé est $FeCl_3$.

8. Procédure selon revendication 6, **caractérisée en ce que** la phase de précipitation de flocs est suivie d'une phase dans laquelle l'oxyde de carbone dégagé ayant une valeur pH jusqu'à plus ou moins 7 est soufflé.

9. Procédure selon revendication 1, 7 ou 8, **caractérisée en ce que** la précipitation de flocs est précédée d'un traitement aérobie-biologique réalisé après la précipitation d'ammonium, en cas d'un contenu important de manières organiques.

10. Procédure selon revendication 9, **caractérisée en ce que** le traitement aérobie-biologique est réalisé en ajoutant du charbon actif.

11. Procédure selon une ou plusieurs revendications mentionnées ci-avant, **caractérisée en ce que** l'on utilise un acide phosphorique avec 45 jusqu'à 55 g p/l, et particulièrement avec 49 g p/l.

12. Procédure selon revendication 3, **caractérisée en ce que** dans la première phase 65 % et dans la troisième phase 35 % de l'acide phosphorique sont ajoutés.

13. Procédure selon une ou plusieurs revendications mentionnées ci-avant, **caractérisée en ce que** la dose de composés de magnésium ajoutée surpasse la quantité nécessaire stoechiométriquement par 10 % au maximum.

14. Procédure selon une ou plusieurs revendications mentionnées ci-avant, **caractérisée en ce que** dans la quatrième phase le tout est remué intensément pendant 2 heures et dans la cinquième phase pendant 3 heures.